(19) Europäisches Patentamt
European Patent Office
Office européen des brevets

(11) **EP 3 187 291 B1**

(12) **EUROPEAN PATENT SPECIFICATION**

(45) Date of publication and mention
of the grant of the patent:
**08.02.2023 Bulletin 2023/06**

(21) Application number: **15382671.4**

(22) Date of filing: **29.12.2015**

(51) International Patent Classification (IPC):
***B23B 45/00*** (1968.09)

(52) Cooperative Patent Classification (CPC):
**B23B 45/008;** B23B 2226/27; B23B 2228/36;
B23B 2260/062; B23B 2260/158; B23B 2270/32;
B23B 2270/48

(54) **PORTABLE DRILLING MACHINE**

TRAGBARE BOHRMASCHINE

MACHINE DE FORAGE PORTABLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.07.2017 Bulletin 2017/27**

(73) Proprietor: **Airbus Defence and Space, S.A.U.
28906 Getafe - Madrid (ES)**

(72) Inventor: **LEON ARÉVALO, Francisco José
28906 Getafe, Madrid (ES)**

(74) Representative: **ABG Intellectual Property Law,
S.L.
Avenida de Burgos, 16D
Edificio Euromor
28036 Madrid (ES)**

(56) References cited:
EP-A1- 2 085 755     EP-A1- 2 559 508
JP-A- 2011 101 931     US-A1- 2009 129 877

**Description**

## TECHNICAL FIELD OF THE INVENTION

The present invention relates to a portable drilling machine according to the preamble of claim 1. Such a portable drilling machine is known from EP 2 559 508 A1.

## BACKGROUND OF THE INVENTION

An ordinary drilling process of more than one different surface comprises the following steps. Firstly, the holes are drilled from smaller diameters to final diameter in several steps. Once holes are reamed to final diameter, the surfaces are separated and the holes of each surface are deburred, the exposed surfaces are cleaned, and an interposition sealant is applied in each surface. Finally, the surfaces shall be precisely located at the same position where they were drilled.

This process is necessary due to the lack of vibration (or vibration control) and the intrinsic characteristics of the pneumatic and electric drilling.

The portable drilling machines can be pneumatic or electric, and in both cases do not have vibration or the vibration control is very limited. This is due to that:

- Mechanic devices do not allow vibration frequency control.
- Mechanic devices only allow a sinusoidal vibration.
- Mechanic devices that have the capability of modifying the vibration amplitude use most of the volume of the drilling machine head.
- Piezoelectric vibration devices exist and can be additionally included in the drilling machine, but they require an additional device that transforms the piezoelectric vibration in the required vibration.

Therefore, there is a need to find a portable drilling machine which do not need said additional devices and which improves the drilling process of more than one different surface.

## SUMMARY OF THE INVENTION

The present invention provides an alternative solution for the aforementioned problems, by a portable drilling machine according to claim 1. In dependent claims, preferred embodiments of the invention are defined.

In a first inventive aspect, the invention provides a portable drilling machine comprising,

- a first driving means being movable along a first longitudinal axis, said first driving means being configured to be connected in a solidary manner to a drill bit along the first longitudinal axis,
- a second driving means arranged in a second longitudinal axis, the first longitudinal axis and the second longitudinal axis being substantially parallel to each other,
- a worm gear connected in a solidary manner to the second driving means along the second longitudinal axis,
- an adapter mechanically connected to the worm gear, said adapter comprising a sleeve mechanically connected to the first driving means,

wherein the adapter is configured to transfer a movement of the worm gear in a first longitudinally movement along the second longitudinal axis and to transfer said first longitudinally movement along the second longitudinal axis in a second longitudinally movement along the first longitudinal axis moving the first driving means.

In this embodiment, the first and the second driving means are configured to generate any force, rotation, torque or displacement. Since a drill bit can be connected in a solidary manner to the first driving means, said connection, which is performed in a solidary manner, transfers any force, rotation, torque or displacement to the drill bit connected. Therefore due to this connection, the first driving means are configured to transfer any force, rotation, torque or displacement to the drill bit connected along the first longitudinal axis.

In the same way that is explained in the previous paragraph, the worm gear is connected in a solidary manner to the second driving means. Said connection transfers any force, rotation, torque or displacement to the worm gear.

Therefore due to this connection, the second driving means are configured to transfer any force, rotation, torque or displacement to the worm gear connected along the second longitudinal axis.

The adapter is mechanically connected to the worm gear. Since the adapter is mechanically connected to the worm gear, any force, rotation, torque or displacement that the worm gear receives, it is transferred to the adapter producing the first longitudinally movement along the second longitudinal axis.

Additionally, since the adapter is mechanically connected to the first driving means through the sleeve, the first longitudinally movement produces through the adapter the second longitudinally movement along the first longitudinal axis. Also, the adapter, through the sleeve, moves the first driving means along the first longitudinal axis. Therefore the adapter due to the mechanical connection above explained is configured to be displaced along a plane formed by the first and the second first longitudinal axis.

As mentioned, the first and second longitudinal axes are substantially parallel to each other. In the context of the invention, substantially parallel means that the angle between both axes is zero or approximately zero, being able the displacement of the different components of the portable drilling machine without variation of the configuration of the adapter.

Advantageously, the disposition of elements of the portable drilling machine allows looseness between the couplings of the different parts of the portable drilling machine, and each variation in any of the first or second driving means is directly transferred to the drill bit. Additionally, this fact allows controlling the longitudinal vibration in the second longitudinal axis during the use of portable drilling machine, and controlling the torque applied by the second driving means without needing an additional gadget or device.

Throughout this document, vibration is understood as a longitudinal mechanical movement which propagates in a longitudinally way in the axis wherein the drill bit of the drilling machine is located.

In a particular embodiment, the second driving means are rotary and are configured to provide a rotatory movement to the worm gear connected to the second driving means.

Advantageously, the worm gear rotates about the second longitudinal axis due to the action of the second driving means. In this embodiment, the adapter comprises a thread which provides the mechanically connection between the worm gear and the adapter. This mechanical connection forms a worn drive wherein while the worm gear rotates the adapter moves along the second longitudinal axis. In a particular embodiment, if the worm gear rotates in a clockwise direction, the adapter moves along the second longitudinal axis in a first direction, and if the worn gear rotates in a counterclockwise direction, the adapter moves along the second longitudinal axis in a second direction.

According to the present invention, the first driving means are configured to provide a vibration along the first longitudinal axis to a drill bit connectable in a solidary manner to the first driving means.

Advantageously, the portable drilling machine is configured to provide a countersinking to avoid waviness or other defects due to vibration while the drilling process.

In a particular embodiment, the first driving means are rotary and are configured to provide a rotatory movement to a drill bit connectable in a solidary manner to the first driving means.

According to the present invention, the portable drilling machine comprises a control unit connected to the first driving means or to the second first driving means, or both.

In a particular embodiment, the control unit is configured to measure a change power consumption of the first driving means in order to distinguish a change of a material being drilled by the portable drilling machine.

Once the change of a material has been measured, this embodiment allows advantageously that the control unit changes the drilling parameters for each material on the stack optimizing the drilling process. In one embodiment, the drilling parameters to be changed are torque and/or rotation speed.

In a particular embodiment, the control unit is configured to measure at least one vibration that a drill bit connected in a solidary manner with the first driving means suffers during drilling a material.

In other embodiment, the control unit is configured to apply a vibration through the first driving means in response to the at least one vibration measured.

The control unit is configured to control the amplitude, the frequency and the wave shape of the vibration, eliminating the necessity of adding a mechanical element to the drilling machine as it is shown in the previous section. Advantageously, this leads to a better diameter tolerance control and a better roughness control.

In a particular embodiment, the control unit is configured to measure a reduction in a power consumption of the first driving means in order to distinguish if a material has been drilled by the portable drilling machine.

In other embodiment the control unit is configured to detect when the drilling is finished and stop the lubrication, avoiding advantageously lubricant leaks inside the aircraft.

In a particular embodiment, the second driving means comprises at least one encoder connected to the control unit and configured to measure a number of loops performed by the worm gear.

In a particular embodiment, the control unit is configured to determine the thickness of a material being drilled by the portable drilling machine, determining a drilling distance (DD) calculated from the number of loops measured by the encoder and measuring a change in the power consumption of the first driving means.

Advantageously, said embodiments allow controlling the drilled distance drilling in one step increasing the efficiency of the drilling and eliminating the necessity of disassembly for cleaning and deburring.

In a particular embodiment, the control unit is configured to store drilling parameters.

Advantageously this embodiment allows programing vibration parameters, making possible change vibration parameters during drilling, and stop the vibration when it is not necessary or not recommended, increasing the efficiency of the drilling process.

In a particular embodiment, the drilling parameters are a first predetermined measurement of the thickness of a material to be drilled, or more than one predetermined measurement of the thickness of the different materials which comprises the material to be drilled, or both.

Additionally, these embodiments allow knowing the position of the drill bill inside the material to be drilled. Once the drill bit reached some position, the control unit turns off the lubrication of the portable drilling machine when it is drilling.

Advantageously, these embodiments allow improving the lubrication control, because each material receives the correct lubrication. As the standard aeronautical drilling is from outside to inside, the portable drilling machine avoids that lubricant will be spilled inside the aircraft reducing the dirtying of the aircraft.

In a particular embodiment, the control unit is configured to

- determine when the drilling distance (DD) is greater than a threshold T, and
- when the drilling distance is greater than T, the control unit is also configured to reduce a torque of the first driving means.

Advantageously, this embodiment allows detecting when the last millimeters of material are being drilled. This leads to reduced delamination when drilling a material, for example carbon fiber, owing to the fact that the control unit reduces the feed rate as required.

In a particular embodiment, the portable drilling machine comprises a distance sensor connected to the control unit, wherein the distance sensor is configured to measure the distance between an end of a drill bit mechanically connected to the first driving means and a material to be drilled.

Advantageously, the control unit is configured to control the approach of a bit connected to the first driving means, therefore, the drilling machine is configured to perform a fast approach of the drill bit reducing the drilling time, since the distance from the drill tip to the material can be introduced as a parameter.

In a particular embodiment, the first driving means and the second driving means are servomotors.

In a particular embodiment, the adapter comprises a gearbox.

All the features described in this specification (including the claims, description and drawings) and/or all the steps of the described method can be combined in any combination, with the exception of combinations of such mutually exclusive features and/or steps.

## DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.

Figure 1   This figure shows the components of a portable drilling machine according to the invention.
Figure 2   This figure shows the change in the drilling parameters when a drill bit drills two different materials.
Figure 3   This figure shows the feed rate and the vibration applied when different materials are drilled.

## DETAILED DESCRIPTION OF THE INVENTION

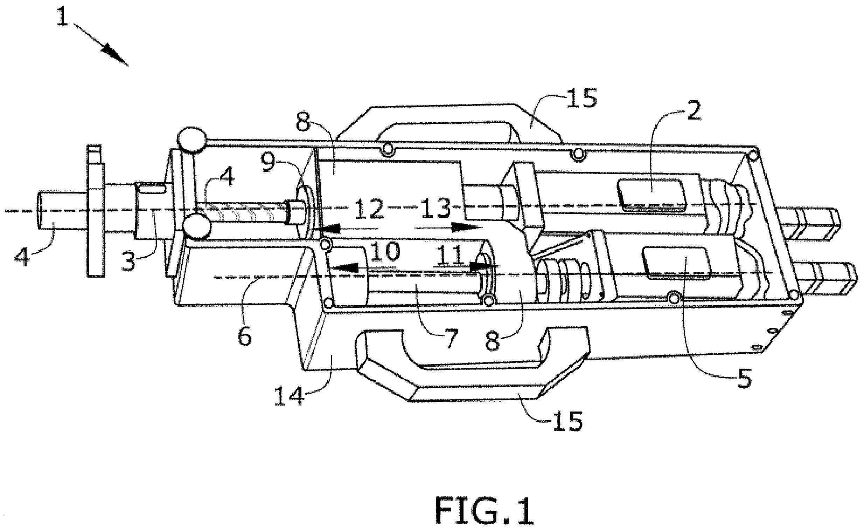

In this section particular embodiments of a portable drilling machine are described. The different components of the portable drilling machine can be appreciated in the figure 1.

*Electromechanical components of the portable drilling machine (1)*

The portable drilling machine (1) comprises a first driving means (2). In the embodiment of the Figure 1, the first driving means (2) are a first servomotor (2). The first servomotor (2) is movable along a first longitudinal axis (3) and is configured to be connected in a solidary manner to a drill bit (4) along the first longitudinal axis (3). Additionally, the first servomotor (2) is configured to provide a rotatory movement to a drill bit (4). Therefore, when the first servomotor (2) is turned on the drill bit (4) rotates around the first longitudinal axis (3).

The portable drilling machine (1) comprises a second driving means (5). In the embodiment of the Figure 1, the second driving means (5) are a second servomotor (5). The second servomotor (5) is arranged in a second longitudinal axis (6), wherein the first longitudinal axis (3) and the second longitudinal axis (6) are parallel to each other as it shown in figure 1.

The portable drilling machine (1) also comprises a worm gear (7) connected in a solidary manner to the second servomotor (5) along the second longitudinal axis (6). Additionally, the second servomotor (5) is configured to provide a rotatory movement to the worm gear (7). Therefore, when the second servomotor (5) is turned on the drill bit (4) rotates around the first longitudinal axis (3) in a clockwise direction or in a counterclockwise direction.

The portable drilling machine (1) comprises an adapter (8) mechanically connected to the worm gear (7). The adapter (8) comprises a sleeve (9) mechanically connected to the first servomotor (2). The adapter (8) is configured to transfer the rotatory movement of the worm gear (7) in a first longitudinally movement along the second longitudinal axis (6) and to transfer said first longitudinally movement along the second longitudinal axis (6) in a second longitudinally movement along the first longitudinal axis (3) moving the first servomotor (2).

In this embodiment, the adapter (8) is mechanically connected to the worm gear (7) in such way that the mechanical connection forms a worm drive. Therefore, if the worm gear (7) rotates in a clockwise direction, the adapter (8) moves along the second longitudinal axis (6) in a first direction (10). Then, the adapter (8) transfers the first longitudinally movement through the sleeve (9) to the first servomotor (2) moving said first servomotor (2) along the first longitudinal axis (3) in a second direction (12).

In case that the worm gear (7) rotates in a counterclockwise direction, the adapter (8) moves along the second longitudinal axis (6) in a third direction (11). Then, the adapter (8) transfers the first longitudinally movement through the sleeve (9) to the first servomotor (2) moving said first servomotor (2) in a fourth direction (13).

The portable drilling machine (1) comprises a box (14) and a handle (15). The box (14) is configured to protect the different components of the portable drilling machine (1) during the drilling, and the handle (15) is configured to provide a safety management of the portable drilling machine (1) during the drilling process by an operator. In a particular embodiment, the portable drilling machine (1) has two handles (15), which provides an even safer management of the portable drilling machine (1) during a drilling process.

*Electronic components of the portable drilling machine (1)*

The portable drilling machine (1) comprises a control unit connected to a distance sensor and to the first (2) and second (5) servomotors. Also, the control unit comprises display means, in particular, a display. Said control unit is configured to display through the display the information of the drilling process in real time.

Additionally, the control unit comprises a user interface with a keyboard. The user interface is configured to store at least one predetermined drilling parameter in the memory unit. The at least one predetermined drilling parameter may be:

- The thickness of the surface to be drilled, for example, 10 mm.
- The number of materials comprised in the surface to be drilled, for example, number of materials comprised in the surface to be drilled is equal to 2.

- The type of materials comprised in the surface to be drilled, for example, titanium, aluminum, carbon fiber, etc.
- The thickness of materials comprised in the surface to be drilled, for example, the first material has a thickness of 3 mm and the second material has a thickness of 7 mm.

The control unit is configured

- to manage drilling parameters provided by the components of the portable drilling machine (1),
- to calculate the remaining drilling distance according to

    ◦ the at least one predetermined drilling parameter, for example thickness of the surface to be drilled,
    ◦ a number of loops performed by the worm gear (7) and measured by a encoder attached to the second servomotor (5),

- to store the drilling parameters, the at least one predetermined drilling parameter and a log of the drilling process in a memory unit, for example, a SSD disk of 16 Gb.

Additionally, the control unit is configured to measure a material change when drilling hybrid unions, or if the drilling has been performed, measuring a change power consumption of the first servomotor (2). A change of the power consumption in the first servomotor (2) could be originated by:

- A change of the material during drilling: A servomotor (2, 5) is configured to absorb any quantity of power from the electrical distribution network until said servomotor (2, 5) reaches its operational limit. This means that when drilling a harder material, the portable drilling machine (1) increases its power consumption in order to overcome the hardness of said material and maintain the speed of the worn gear (7).

- The drilling has been performed: If the power consumption of the first servomotor (2) is drastically reduced, it indicates that the drilling has been performed.

Advantageously due to the drilling parameters received, the control unit is configured to display through the display the information of the drilling process in real time.

Additionally, the control unit is configured to manage the vibration originated in the drilling process. From a mathematical point of view, the vibration may be considered as a function on a feed-rate and a spindle speed

$$FR_i(t)= \text{Feed rate [mm/min]} = F(v, A, f)$$

$$FR_T(t) = FRa(t) + FRb(t) + \ldots + FRn(t)$$

The Feed Rate (F) is the speed at which the drill bit (4) of the portable drilling machine (1) moves forward (second direction (12)) or backwards (fourth direction (13)), and a, b, ..., n, are the time intervals corresponding to each material. Advantageously, the first servomotor (2) is configured to provide vibrations in order to compensate the vibrations which a material produced during drilling, therefore, the feed-rate can be defined as a hybrid function which comprises:

- A continuous function wherein "v" represents the direct component of the speed at which the drill bit (4) of the portable drilling machine (1) moves forward.
- A non-continuous function wherein "A" and "f" is respectively the amplitude and the frequency, wherein "A" and "f" are components of the vibration provided by the first servomotor (2) in order to counteract the vibrations which a material produced during drilling. This function is not continuous because depends on the material, the amplitude (A) and/or the frequency (f) may be different, or even it could not necessary to provide a vibration to counteract the vibrations which a material produced during drilling, being the amplitude and the frequency in this case equal to zero.

$$N_i(t) = \text{Drill bit (4) speed [rpm]}$$

$$NT(t) = Na(t) + Nb(t) + \ldots + Nn(t)$$

The spindle speed (N) is the drill bit (4) rotation speed, and a, b, ..., n, are the time intervals corresponding to each material.

Therefore, the control unit is configured to manage the vibration originated in the drilling process in two different ways:

a) Predetermined countermeasures. In this embodiment, the control unit has stored in its memory unit the following predetermined drilling parameters: the thickness of materials comprised in the surface to be drilled, the number of materials comprised in the surface to be drilled, the thickness of the surface to be drilled and the predetermined vibrations to apply for each material during drilling.

During the drilling, the control unit applies a predetermined vibration stored in the memory unit associated to each material. For that propose, the control unit determines the drilling distance (DD) from the number of loops measured by the encoder connected to the second servomotor (5) and comparing to the predetermined drilling parameters which indicates the thickness of materials comprised in the surface to be drilled and the thickness of the surface to be drilled. For example:

| Thickness of the surface to be drilled | 10 mm |
|---|---|
| Number of materials comprised in the surface | 2 |
| Thickness of the first material | 7 mm |
| Thickness of the second material | 3 mm |
| Counter vibration for the first material | 2 N/m |
| Counter vibration for the second material | 1 N/m |

In this case, if the drilling distance is 5 mm, the control unit would apply a counter vibration of 2 N/m and if the drilling distance is 7 mm the control unit would apply a counter vibration of 2 N/m.

b) Direct countermeasures. In this embodiment, the control unit measures the first servomotor (2) feedback, i.e. variations detected by the first servomotor (2) during drilling on the applied torque due to the power consumption of the first servomotor (2). Then, the control unit applies a corresponding negative feedback, i.e. a vibration with the same frequency and amplitude but with an opposite direction of the variations or vibrations measured.

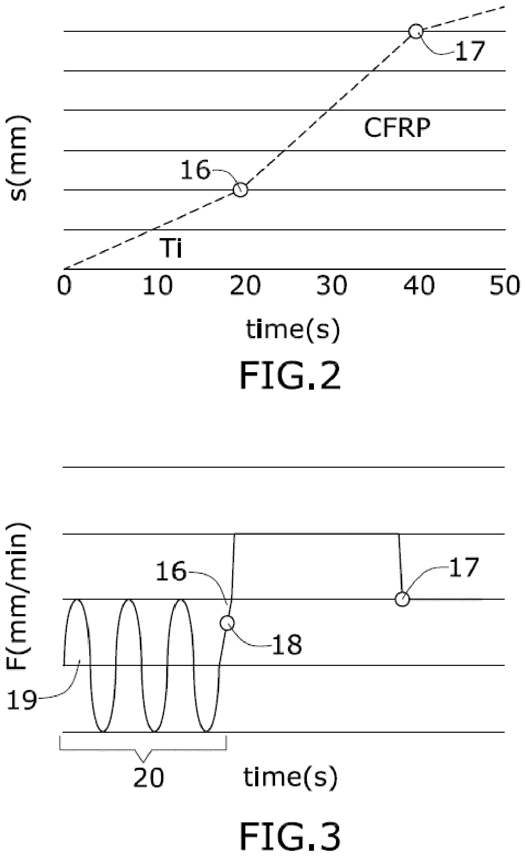

Figures 2 and 3 show the drilling parameters measured by the control unit during the drilling. The surface to be drilled comprises two materials titanium (Ti) and carbon fiber reinforced plastic (CFRP).

While drilling, the portable drilling machine (1) is configured to apply a vibration through the first servomotor (2) in order to countersinking the vibrations generated by the drilling. The vibration may have any amplitude, frequency or wave shape. In this embodiment, the chosen feed rate is sinusoidal which implies a non-sinusoidal advance which implies a non-sinusoidal advance once the continuous component "v" is added. In figures 2 and 3 the following features may be observed:

1. When the Ti-CFRP interface is detected (16), the feed rate increases. Figure 2 shows the hardest material (Ti) requires more power to maintain the torque and the speed than the softest material (CFRP).

In this stage as it is shown in figure 3, the vibration provided by the first servomotor (2) is a hybrid function: non-continuous (a sinusoidal vibration (20)) and continuous (19) during the drilling of the titanium (Ti).

In a second stage, the vibration stops (18) due to the change of material as it is shown in figure 3. The control unit is configured to stop the vibration provided by the first servomotor (2), if the material to be drilled do not need, for example, on carbon fiber composites.

2. Spindle speed is different but constant on each material (Figure 2).

3. When the drilling end is detected (17), the feed rate is reduced in order to avoid delamination, but spindle speed remains constant.

The movement of the drill bill (4) inside the surface to be drilled is conditioned by the feed rate, as it is shown in Figure 3, but independent from spindle speed. Advantageously, the control unit is configured to control the vibration allowing the use of high speed peck drilling i.e. the drill is slightly retracted, breaking the chips. In this case the relationship between feed rate and revolutions is changed making possible to fragment ships when chips thickness is zero. The control of the vibration and the rest of the parameters allow increasing the efficiency and personalizing each drilling process for each material.

**Claims**

**1.** A portable drilling machine (1) comprising,

- a first driving means (2) being movable along a first longitudinal axis (3), said first driving means (2) being configured to be connected in a solidary manner to a drill bit (4) along the first longitudinal axis (3),
- a second driving means (5) arranged in a second longitudinal axis (6), the first longitudinal axis (3) and the second longitudinal axis (6) being substantially parallel to each other,
- a worm gear (7) connected in a solidary manner to the second driving means (5) along the second longitudinal axis (6),
- an adapter (8) mechanically connected to the worm gear (7), said adapter (8) comprising a sleeve (9) mechanically connected to the first driving means (2),

wherein

the adapter (8) is configured to transfer a movement of the worm gear (7) in a first longitudinally movement along the second longitudinal axis (6) and to transfer said first longitudinally movement along the second longitudinal axis (6) in a second longitudinally movement along the first longitudinal axis (3) moving the first driving means (2),
the first driving means (2) are configured to generate any force, rotation, torque or displacement to the drill bit (4) to be connected along the first longitudinal axis (3), and the portable drilling machine (1) further comprises a control unit connected to the first driving means (2) or to the second driving means (5), or both, **characterised**

**in that** the first driving means (2) are configured to provide during drilling a vibration along the first longitudinal axis (3) to a drill bit (4) connectable in a solidary manner to the first driving means (2).

2. The portable drilling machine (1) according to the claim 1, wherein the second driving means (5) are rotatory and are configured to provide a rotatory movement to the worm gear (7) connected to the second driving means (5).

3. The portable drilling machine (1) according to any of the previous claims, wherein the first driving means (2) are rotatory and are configured to provide a rotatory movement to a drill bit (4) connectable in a solidary manner to the first driving means (2).

4. The portable drilling machine (1) according to any of previous claims, wherein the control unit is configured to measure a change power consumption of the first driving means (2) in order to distinguish a change of a material being drilled by the portable drilling machine (1).

5. The portable drilling machine (1) according to any of previous claims, wherein the control unit is configured to measure a reduction in a power consumption of the first driving means (2) in order to distinguish if a material has been drilled by the portable drilling machine (1).

6. The portable drilling machine (1) according to claim 2 and any of 3 to 5, wherein the second driving means (5) comprises at least one encoder connected to the control unit and configured to measure a number of loops performed by the worm gear (7).

7. The portable drilling machine (1) according to claim 6, wherein the control unit is configured to determine the thickness of a material being drilled by the portable drilling machine (1), determining a drilling distance (DD) calculated from the number of loops measured by the encoder and measuring a change in the power consumption of the first driving means (2).

8. The portable drilling machine (1) according to any of the previous claims, wherein the control unit is configured to store drilling parameters.

9. The portable drilling machine (1) according to claim 8, wherein the drilling parameters are a first predetermined measurement of the thickness of a material to be drilled, or more than one predetermined measurement of the thickness of the different materials which comprises the material to be drilled, or both.

10. The portable drilling machine (1) according to any of the claims 8 or 9, wherein the control unit is configured to

    - determine when the drilling distance (DD) is greater than a threshold T, and
    - when the drilling distance (DD) is greater than T, the control unit is also configured to reduce a torque of the first driving means (2).

11. The portable drilling machine (1) according to any of previous claims, comprising a distance sensor connected to the control unit, wherein the distance sensor is configured to measure the distance between an end of a drill bit (4) mechanically connected to the first driving means (2) and a material to be drilled.

12. The portable drilling machine (1) according any of the previous claims, wherein the first driving means (2) and the second driving means (5) are servomotors.

13. The portable drilling machine (1) according to any of the previous claims, wherein the adapter (8) comprises a gearbox.

**Patentansprüche**

1. Tragbare Bohrmaschine (1) mit

    - einem ersten Antriebsmittel (2), das entlang einer ersten Längsachse (3) bewegbar ist, wobei das erste Antriebsmittel (2) dazu ausgebildet ist, entlang der ersten Längsachse (3) fest mit einem Bohreinsatz (4) verbunden zu werden,
    - einem zweiten Antriebsmittel (5), das in einer zweiten Längsachse (6) angeordnet ist, wobei die erste Längsachse (3) und die zweite Längsachse (6) im Wesentlichen parallel zueinander sind,
- einem Schneckenrad (7), das entlang der zweiten Längsachse (6) fest mit dem zweiten Antriebsmittel (5) verbunden ist,
- einem Adapter (8), der mechanisch mit dem Schneckenrad (7) verbunden ist, wobei der Adapter (8) eine mit dem ersten Antriebsmittel (2) mechanisch verbundene Hülse (9) umfasst,

wobei

der Adapter (8) dazu ausgebildet ist, eine Bewegung des Schneckenrads (7) in erste Bewegung in Längsrichtung entlang der zweiten Längsachse (6) umzusetzen und die erste Bewegung in Längsrichtung entlang der zweiten Längsachse (6) in eine zweite Bewegung in Längsrichtung entlang der ersten Längsachse (3) umzusetzen, die das erste Antriebsmittel (2) in Bewegung setzt,
das erste Antriebsmittel (2) dazu ausgebildet ist, eine Kraft, eine Drehung, ein Drehmoment oder eine Verschiebung auf den Bohreinsatz (4) zu erzeugen, der entlang der ersten Längsachse (3) zu verbinden ist, und
die tragbare Bohrmaschine (1) ferner eine Steuereinheit umfasst, die mit dem ersten Antriebsmittel (2) oder mit dem zweiten Antriebsmittel (5) oder mit beiden verbunden ist, **dadurch gekennzeichnet, dass** das erste Antriebsmittel (2) dazu ausgebildet ist, während des Bohrens eine Vibration entlang der ersten Längsachse (3) auf einen Bohreinsatz (4) zu erzeugen, der fest mit dem ersten Antriebsmittel (2) zu verbinden ist.

2. Tragbare Bohrmaschine (1) nach Anspruch 1, wobei die zweiten Antriebsmittel (5) drehbar sind und dazu ausgebildet sind, dass mit den zweiten Antriebsmitteln (5) verbundenen Schneckenrad (7) in eine Drehbewegung zu versetzen.

3. Tragbare Bohrmaschine (1) nach einem der vorhergehenden Ansprüche, wobei die ersten Antriebsmittel (2) drehbar sind und dazu ausgebildet sind, einen mit den ersten Antriebsmitteln (2) fest zu verbindenden Bohreinsatz (4) in eine Drehbewegung zu versetzen.

4. Tragbare Bohrmaschine (1) nach einem der vorhergehenden Ansprüche, wobei die Steuereinheit dazu ausgebildet ist, eine Änderung im Stromverbrauch des ersten Antriebsmittels (2) zu messen, um eine Veränderung eines von der tragbaren Bohrmaschine (1) gebohrten Materials zu erkennen.

5. Tragbare Bohrmaschine (1) nach einem der vorhergehenden Ansprüche, wobei die Steuereinheit dazu ausgebildet ist, eine Verringerung im Stromverbrauch des ersten Antriebsmittels (2) zu messen, um zu erkennen, ob ein Material von der tragbaren Bohrmaschine (1) gebohrt wurde.

6. Tragbare Bohrmaschine (1) nach Anspruch 2 und einem der Ansprüche 3 bis 5, wobei das zweite Antriebsmittel (5) mindestens einen Drehgeber umfasst, der mit der Steuereinheit verbunden ist und dazu ausgebildet ist, eine Anzahl von Schleifen zu messen, die von dem Schneckenrad (7) ausgeführt werden.

7. Tragbare Bohrmaschine (1) nach Anspruch 6, wobei die Steuereinheit dazu ausgebildet ist, die Dicke eines von der tragbaren Bohrmaschine (1) gebohrten Materials zu ermitteln, einen aus der von dem Drehgeber gemessenen Anzahl von Schleifen berechneten Bohrabstand (DD) zu ermitteln und eine Änderung im Stromverbrauch des ersten Antriebsmittels (2) zu messen.

8. Tragbare Bohrmaschine (1) nach einem der vorhergehenden Ansprüche, wobei die Steuereinheit dazu ausgebildet ist, Bohrparameter zu speichern.

9. Tragbare Bohrmaschine (1) nach Anspruch 8, wobei es sich bei den Bohrparametern um einen ersten vorbestimmten Messwert der Dicke eines zu bohrenden Materials oder um mehr als einen vorbestimmten Messwert der Dicke der verschiedenen Materialien handelt, der das zu bohrende Material umfasst, oder beides.

10. Tragbare Bohrmaschine (1) nach einem der Ansprüche 8 oder 9, wobei die Steuereinheit dazu ausgebildet ist,

- es festzustellen, wenn der Bohrabstand (DD) größer ist als ein Schwellenwert T, und
- wenn der Bohrabstand (DD) größer ist als T, ist die Steuereinheit außerdem dazu ausgebildet, ein Drehmoment des ersten Antriebsmittels (2) zu verringern.

11. Tragbare Bohrmaschine (1) nach einem der vorhergehenden Ansprüche, die einen mit der Steuereinheit verbundenen Abstandssensor umfasst, wobei der Abstandssensor dazu ausgebildet ist, den Abstand zwischen einem Ende eines mit dem ersten Antriebsmittel (2) mechanisch verbundenen Bohreinsatzes (4) und einem zu bohrenden Material zu messen.

**12.** Tragbare Bohrmaschine (1) nach einem der vorhergehenden Ansprüche, wobei es sich bei dem ersten Antriebsmittel (2) und dem zweiten Antriebsmittel (5) um Servomotoren handelt.

**13.** Tragbare Bohrmaschine (1) nach einem der vorhergehenden Ansprüche, wobei der Adapter (8) ein Getriebe umfasst.

**Revendications**

**1.** Machine de forage portable (1) comprenant,

- des premiers moyens d'entraînement (2) mobiles le long d'un premier axe longitudinal (3), lesdits premiers moyens d'entraînement (2) étant configurés pour être reliés de manière solidaire à un foret (4) le long du premier axe longitudinal (3),
- des seconds moyens d'entraînement (5) disposés selon un second axe longitudinal (6), le premier axe longitudinal (3) et le second axe longitudinal (6) étant sensiblement parallèles l'un à l'autre,
- un engrenage à vis sans fin (7) relié de manière solidaire aux seconds moyens d'entraînement (5) le long du second axe longitudinal (6),
- un adaptateur (8) relié mécaniquement à l'engrenage à vis sans fin (7), ledit adaptateur (8) comprenant un manchon (9) relié mécaniquement aux premiers moyens d'entraînement (2),

dans lequel

l'adaptateur (8) est configuré pour transférer un mouvement de l'engrenage à vis sans fin (7) en un premier mouvement longitudinal le long du second axe longitudinal (6) et pour transférer ledit premier mouvement longitudinal le long du second axe longitudinal (6) en un second mouvement longitudinal le long du premier axe longitudinal (3) déplaçant les premiers moyens d'entraînement (2), les premiers moyens d'entraînement (2) sont configurés pour générer une force, une rotation, un couple ou un déplacement quelconque au foret (4) destinés à être relié le long du premier axe longitudinal (3), et la machine de forage portable (1) comprenant en outre une unité de commande connectée aux premiers moyens d'entraînement (2) ou aux seconds moyens d'entraînement (5), ou aux deux,

**caractérisé en ce que** les premiers moyens d'entraînement (2) sont configurés pour fournir durant un forage une vibration le long du premier axe longitudinal (3) à un forêt (4) apte à être relié de manière solidaire aux premiers moyens d'entraînement (2).

**2.** Machine de forage portable (1) selon la revendication 1, dans laquelle les seconds moyens d'entraînement (5) sont rotatifs et sont configurés pour fournir un mouvement de rotation à l'engrenage à vis sans fin (7) relié aux seconds moyens d'entraînement (5).

**3.** Machine de forage portable (1) selon l'une quelconque des revendications précédentes, dans laquelle les premiers moyens d'entraînement (2) sont rotatifs et sont configurés pour fournir un mouvement de rotation à un forêt (4) apte à être relié de manière solidaire aux premiers moyens d'entraînement (2).

**4.** Machine de forage portable (1) selon l'une quelconque des revendications précédentes, dans laquelle l'unité de commande est configurée pour mesurer un changement de consommation d'énergie des premiers moyens d'entraînement (2) afin de distinguer un changement d'un matériau en cours de forage par la machine de forage portable (1).

**5.** Machine de forage portable (1) selon l'une quelconque des revendications précédentes, dans laquelle l'unité de commande est configurée pour mesurer une réduction d'une consommation d'énergie des premiers moyens d'entraînement (2) afin de distinguer si un matériau a été foré par la machine de forage portable (1).

**6.** Machine de forage portable (1) selon la revendication 2 et l'une quelconque des revendications 3 à 5, dans laquelle les seconds moyens d'entraînement (5) comprennent au moins un encodeur connecté à l'unité de commande et configuré pour mesurer un nombre de boucles effectuées par l'engrenage à vis sans fin (7).

**7.** Machine de forage portable (1) selon la revendication 6, dans laquelle l'unité de commande est configurée pour déterminer l'épaisseur d'un matériau en train d'être foré par la machine de forage portable (1), en déterminant une distance de forage (DD) calculée à partir du nombre de boucles mesurées par l'encodeur et en mesurant un changement de la consommation d'énergie des premiers moyens d'entraînement (2).

**8.** Machine de forage portable (1) selon l'une quelconque des revendications précédentes, dans laquelle l'unité de commande est configurée pour enregistrer des paramètres de forage.

**9.** Machine de forage portable (1) selon la revendication 8, dans laquelle les paramètres de forage sont une première mesure prédéterminée de l'épaisseur d'un matériau à forer, ou plus d'une mesure prédéterminée de l'épaisseur de différents matériaux qui comprennent le matériau à forer, ou les deux.

**10.** Machine de forage portable (1) selon l'une quelconque des revendications 8 ou 9, dans laquelle l'unité de commande est configurée pour

  - déterminer lorsque la distance de forage (DD) est supérieure à un seuil T, et
  - lorsque la distance de forage (DD) est supérieure à T, l'unité de commande est également configurée pour réduire un couple des premiers moyens d'entraînement (2).

**11.** Machine de forage portable (1) selon l'une quelconque des revendications précédentes, comprenant un capteur de distance connecté à l'unité de commande, dans laquelle le capteur de distance est configuré pour mesurer la distance entre une extrémité d'un foret (4) reliée mécaniquement aux premiers moyens d'entraînement (2) et un matériau à forer.

**12.** Machine de forage portable (1) selon l'une quelconque des revendications précédentes, dans laquelle les premiers moyens d'entraînement (2) et les seconds moyens d'entraînement (5) sont des servomoteurs.

**13.** Machine de forage portable (1) selon l'une quelconque des revendications précédentes, dans laquelle l'adaptateur (8) comprend une boîte d'engrenages.

FIG.1

**FIG.2**

**FIG.3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2559508 A1